(19) **Europäisches Patentamt**
European Patent Office
Office européen des brevets

(11) **EP 2 091 015 B1**

(12) **EUROPÄISCHE PATENTSCHRIFT**

(45) Veröffentlichungstag und Bekanntmachung des Hinweises auf die Patenterteilung:
**03.11.2010 Patentblatt 2010/44**

(51) Int Cl.:
**G06Q 30/00** *(2006.01)*

(21) Anmeldenummer: **08002872.3**

(22) Anmeldetag: **15.02.2008**

(54) **Verfahren und computerimplementiertes System zur Bestimmung der Passqualität eines individuell gefertigten Kleidungsstücks**

Method and computer-implemented system for the determination of the fit quality of an individually manufactured article of clothing

Procédure et système informatisé pour déterminer si un vêtement fabriqué individuellement est adapté à un client

(84) Benannte Vertragsstaaten:
**DE**

(43) Veröffentlichungstag der Anmeldung:
**19.08.2009 Patentblatt 2009/34**

(73) Patentinhaber: **Seiler, Stefan**
**14165 Berlin (DE)**

(72) Erfinder: **Seiler, Stefan**
**14165 Berlin (DE)**

(74) Vertreter: **von Hellfeld, Axel**
**Wuesthoff & Wuesthoff**
**Patent- und Rechtsanwälte**
**Schweigerstrasse 2**
**81541 München (DE)**

(56) Entgegenhaltungen:
**EP-A- 1 229 478          WO-A- 01/39051**
**DE-A1- 10 319 223        DE-A1- 19 956 574**
**DE-A1- 19 957 725        US-A1- 2002 188 372**
**US-A1- 2004 083 142      US-A1- 2005 071 256**
**US-A1- 2007 032 898**

**Beschreibung**

Gebiet der Erfindung

Die Erfindung betrifft eine Technik zum Anpassen von individuell getertigten Kleidungsstücken an einen Verbraucher.

Hintergrund der Erfindung

Das Problem des Bestimmens, ob ein Kleidungsstück den Körpermaßen einer Person entspricht oder nicht, besteht auch im Bereich von Organisationen, die eine größere Anzahl von Personen mit Berufskleidung einkleiden, namentlich mit Uniformen. In einigen Organisationen, die Berufskleidung ausgeben (beispielsweise der Deutschen Bundeswehr), werden individuell den Körpermaßen einer ersten Person entsprechend hergestellte Kleidungsstücke, nachdem die erste Person die Kleidungsstücke nicht mehr benötigt, in einem Lager aufgenommen, um später von einer zweiten Person verwendet werden zu können. Ein zu betreibender Aufwand, um ein Kleidungsstück im Lager zu finden, das den Körpermaßen der zweiten Person entspricht, ist allgemein hoch, da mit auf herkömmlichen Kleidergrößen basierenden Systemen eine Katalogisierung eines solchen Lagerbestandes individueller Kleidungsstücke nur unzureichend durchführbar ist.

Ein aus der WO 01/039051 A3 bekanntes Verfahren bestimmt, ob ein Kleidungsstück zu Körpermaßen eines Verbrauchers passt, auf der Basis der Körpermaße des Verbrauchers, der Fertigungsmaße des Produkts, Relationskoeffizienten zwischen zueinander korrespondierenden Körper- und Fertigungsmaßen und einer Toleranzmatrix, die Varianzen der Relationskoeffizienten beschreibt. Auf der Basis der Körpermaße wird in einem ersten Schritt ein "ideales" Produkt bestimmt, welches in einem zweiten Schritt mit einer Anzahl "realer" Produkte unterschiedlicher Fertigungsmaße verglichen wird. Das am besten passende "reale" Produkt wird als dasjenige bestimmt, dessen Summe der gewichteten Abweichungen zwischen Real- und Idealprodukt minimal ist.

Das Dokument EP 1 229 478 A2 offenbart ein elektronisches Handelssystem mit einem Benutzer-Endgerät, das ein Ergebnis eines Vergleichs zwischen einer Warengröße und einer Körpergröße eines Verbrauchers grafisch ausgibt.

Der Erfindung liegt daher die Aufgabe zugrunde, eine Technik bereitzustellen, mittels derer die Frage, ob ein bestimmtes individuall gefertigtes Kleidungsstück den Körpermaßen eines Verbrauchers entspricht oder nicht, schnell und zutreffend beantwortet werden kann.

Kurzer Abriss der Erfindung

Gemäß einem ersten Aspekt wird das Problem gelöst durch ein Verfahren gemäß Anspruch 1.

Ferner kann ein Verfahren zum Feststellen, ob ein individuall gefertigtes Kleidungsstück den Körpermaßen eines Verbrauchers entspricht, betrachtet werden, welches folgende Schritte umfasst: Bestimmen von mehreren, einem Kleidungsstück zugeordneten Produktionsmaßen und jeweils einer dem Produktionsmaß zugeordneten Toleranz; Bestimmen eines Körpermaßes des Verbrauchers für wenigstens ein, einem Produktionsmaß zugeordneten Körpermaß; Bestimmen, ob jedes so bestimmte Körpermaß innerhalb eines Toleranzfensters liegt, welches aus dem dem Körpermaß zugeordneten Produktionsmaß und einer dem Produktionsmaß zugeordneten Toleranz bestimmt ist; und dann, wenn jedes Körpermaß innerhalb des ihm zugeordneten Toleranzfensters liegt, Feststellen, dass das Kleidungsstück den Körpermaßen des Verbrauchers entspricht.

Jede einem Produktionsmaß zugeordnete Toleranz kann einen positiven und einen negativen Anteil umfassen, so dass eine tolerierbare Abweichung von einem Produktionsmaß in positiver Richtung einen anderen absoluten Wert umfassen kann als eine entsprechende Abweichung in negativer Richtung. Die Toleranz kann auch in Anteilen des Produktionsmaßes ausgedrückt werden, beispielsweise in Prozent. Auch kann die Toleranz eine Einheit aufweisen, welche sie mit dem zugeordneten Produktionsmaß vergleichbar macht, beispielsweise eine Längen- oder Maßeinheit. Die Toleranz kann auch statt dem Produktionsmaß dem Körpermaß zugeordnet sein. In einer weiteren Ausgestaltung besitzen sowohl die Produktionsmaße als auch die Körpermaße jeweils zugeordnete Toleranzen. Die Anzahl der Körpermaße kann ungleich der Anzahl der Produktionsmaße sein. In einer Ausgestaltung der Erfindung können Produktionsmaße vorgegeben sein, für die jeweils zugeordnete Körpermaße vorliegen müssen; zusätzlich vorliegenden Körpermaße können nicht erforderlich sein, und das Verfahren dann nicht beeinflussen, wenn es keine ihnen zugeordneten Produktionsmaße gibt. Das Feststellen, dass das Kleidungsstück dem Verbraucher passt, kann das Ausgeben eines entsprechenden Signals umfassen.

Die Produktionsmaße können als Komponenten eines Produktionsmaß-Vektors und die Körpermaße als Komponenten eines Körpermaß-Vektors behandelt werden, und es kann geprüft werden, ob der Körpermaß-Vektor in einem dem Produktionsmaß-Vektor zugeordneten Toleranzraum liegt. Das Verfahren kann mit negativem Ergebnis ("passt nicht") abgebrochen werden, wenn ein Körpermaß gefunden wird, welches nicht innerhalb der Toleranz der entsprechenden Produktionsmaßes liegt.

Der Produktionsmaß-Vektor kann eine beliebige Dimension $\geq 2$ annehmen. Der Körpermaß-Vektor kann eine beliebige Dimension, die kleiner oder gleich der Dimension des Produktionsmaß-Vektors ist, zumindest die Dimension Z 2 aufweist, annehmen, wobei jede Komponente eines Vektors jeweils genau einer Komponente des anderen Vektors zugeordnet ist.

Der Toleranzraum kann bezüglich verschiedener Produktionsmaße unterschiedliche relative und absolute Abmessungen haben. Die Produktionsmaße können unterschiedliche Einheiten aufweisen, beispielsweise cm, inch, kg.

Das Verfahren umfasst das Bestimmen einer Passqualität, welche einer Qualität des Passens des Kleidungsstücks an die Körpermaße des Verbrauchers zugeordnet ist. Die Passqualität kann auf einer festen Skala, beispielsweise zwischen 1 und 0 ausgedrückt sein. Ein niedriger Wert kann eine schlechte Passqualität, und ein hoher Wert eine gute Passqualität ausdrükken; der umgekehrte Fall ist ebenfalls möglich. Die Passqualität kann auch auf einer offenen oder einseitig offenen Skala angegeben werden.

Das Bestimmen der Passqualität kann den Produktionsmaßen zugeordnete Wichtungsfaktoren beinhalten, von denen jeder einer Korrelation zwischen einer Abweichung des jeweiligen Körpermaßes von dem ihm zugeordneten Produktionsmaß und einer Signifikanz zugeordnet ist. Die Signifikanz kann beispielsweise empirisch, statistisch oder demoskopisch bestimmt sein. Jeder Wichtungsfaktor kann in Form einer dimensionslosen Zahl angegeben sein. Diese Zahl kann beispielsweise zwischen 0 und 1 liegen, wobei 0 eine geringe Signifikanz einer Abweichung und 1 einer hohen Signifikanz einer Abweichung zugeordnet sein kann, oder umgekehrt. In einer anderen Ausgestaltung kann der Wertebereich der Wichtungen auf einer halboffenen Skala angegeben sein, auf der ein Festwert von beispielsweise 0 eine minimale (oder maximale) Wichtung kennzeichnet und von dem Festwert entfernte Zahlen auf eine zunehmend höhere (niedrigere) Wichtung hinweisen. Der Wertebereich jedes Wichtungsfaktors kann einen neutralen Wert umfassen, der eine durchschnittliche oder nicht vorzunehmende Wichtung kennzeichnet.

Das Kleidungsstück kann eine Größenbezeichnung aufweisen, welche der Kombination seiner Produktionsmaße zugewiesen ist, wobei das Verfahren für eine Reihe Kleidungsstücke durchgeführt werden kann, die sich im Wesentlichen nur in ihren Produktionsmaßen unterscheiden, und wobei die Größenbezeichnungen all derjenigen Kleidungsstücke ausgegeben werden, für die ein Passen festgestellt wurde.

Ein Passen kann auch durch Vergleich einer bestimmten Passqualität mit einem vorbestimmten Schwellenwert erfolgen. Die Größenbezeichnung eines Kleidungsstücks kann beispielsweise auf einer beliebigen, bekannten Skala von Konfektionsgrößen ausgedrückt werden. Beispiele solcher Skalen umfassen XS-S-M-L-XL und die deutsche Skala von Konfektionsgrößen für Damen in Zweierschritten zwischen 34 und 50. Alternativ kann auch nur die Größenbezeichnung desjenigen Kleidungsstückes ausgegeben werden, für welches festgestellt wurde, dass seine Passqualität unter allen betrachteten Kleidungsstücken am höchsten ist. Alternativ können auch beispielsweise die Größenbezeichnungen einer vorbestimmten Anzahl bestpassender Kleidungsstücke ausgegeben werden. In einer weiteren Ausgestaltung kann anstelle einer . Größenbezeichnung auch jede andere Bezeichnung verwendet werden, die das betreffende Kleidungsstück charakterisiert.

Die Beurteilung der Pasqualität kann mit Hilfe von Verfahren der Diskriminanzanalyse durchgeführt werden. Wie dem Fachmann bekannt ist, behandelt die Diskriminanzanalyse Verfahren zu Bestimmung linearer Kombinationen von Merkmalen, die zwei Klassen von Objekten voneinander unterscheidet. Im vorliegenden Fall kann es sich beispielsweise um die Klassen "passt" und "passt nicht" handeln. Dem Fachmann geläufige Beispiele für Verfahren der Diskriminanzanalyse sind die Bayessche Diskriminanzanalyse, die Maximum-Likelihood-Methode und Verfahren, die die Fishersche Diskriminanzfunktion verwenden.

Das Verfahren kann in Form eines Computerprogrammprodukts mit Programmcodemitteln vorliegen, wenn das Computerprogrammprodukt auf einer Verarbeitungseinheit läuft. Das Computerprogrammprodukt kann auf einem computerlesbaren Datenträger, z.B. einem Magnetspeicher oder einem Halbleiterspeicher, gespeichert sein.

Nach einem zweiten Aspekt wird das Problem gelöst durch ein System gemäß Anspruch 8.

Die Eingabemittel können beispielsweise übliche Computer-Eingabemittel umfassen, beispielsweise eine Tastatur, einen Nummernblock, eine Maus, einen Trackball, einen Joystick, einen Touchscreen usw. Zusätzlich oder alternativ können die Eingabemittel eine Schnittstelle umfassen, mittels derer Köpermaße eines Verbrauchers empfangen werden. Die Schnittstelle kann sowohl physisch als auch datentechnisch definiert sein. Insbesondere kann ein auf der Schnittstelle ablaufendes Protokoll spezifiziert sein. Die Schnittstelle kann zum Anschluss einer Vorrichtung zur Aufnahme von Körpermaßen eines Verbrauchers vorgesehen sein. Die Schnittstelle kann auch mittels eines Netzwerks an eine Datenquelle angeschlossen sein. In einer weiteren Ausgestaltung kann das Eingabemittel eine Schnittstelle zu einer Datenbank umfassen, in der eine Vielzahl von Körpermaßen mehrerer Verbraucher abgespeichert sind.

Die Speichermittel für die Produktionsmaße können ebenfalls in einer Datenbank gespeichert werden; diese Datenbank kann mit einer Datenbank für Körpermaße von Verbrauchern identisch sein oder auch nicht. Die Ausgabeeinrichtung kann beispielsweise optische und/oder akustische Ausgabemittel umfassen. Es können übliche Computer-Peripheriegeräte als Ausgabemittel verwendet werden, beispielsweise Monitore, Displays, Leuchtdioden, Lampen, Drucker, Projektoren, Summer, Lautsprecher, haptische Ausgabegeräte usw.

Kurze Beschreibung der Zeichnungen

Im Folgenden werden wichtige Aspekte der Erfindung anhand von möglichen Ausführungsformen beschrieben, in denen:

Fig. 1a zwei mehrdimensionale Volumen zeigt, die einander teilweise durchdringen;

Fig. 1b einen mehrdimensionalen Vektor zeigt, dessen Endpunkt innerhalb eines mehrdimensionalen Volumens liegt; und

Fig. 2 ein System zur Durchführung des erfindungsgemäßen Verfahrens zeigt.

Beschreibung eines Ausführungsbeispiels

Ein Kleidungsstück kann bezüglich des Problems des Passens an die Körpermaße eines Verbrauchers durch eine Anzahl von Maßen charakterisiert werden. Solche Maße, beispielsweise ein Bauchumfang oder eine Armlänge, sind üblicherweise zunächst voneinander unabhängig und können daher als Komponenten eines Vektors aufgefasst werden. In entsprechender Weise kann der Körper eines Verbrauchers bezüglich des Problems des Passens eines Kleidungsstücks durch eine Anzahl von Körpermaßen charakterisiert werden, die, nachdem sie grundsätzlich ebenfalls voneinander unabhängig sind, auch als Vektor notiert werden können.

Um einen Vergleich von Produktionsmaßen des Kleidungsstücks mit Körpermaßen des Verbrauchers zu ermöglichen, ist zunächst dafür zu sorgen, dass nur einander entsprechende Maße miteinander verglichen werden. Komponenten eines Vektors, die keine Entsprechung im anderen Vektor haben, werden daher aus dem Vektor entfernt. Die verbleibenden Komponenten werden vorteilhafterweise in beiden Vektoren in der gleichen Reihenfolge angeordnet, so dass mittels eines Index auf Komponenten des jeweiligen Vektors zugegriffen werden kann, und gleiche Indizes einander entsprechende Komponenten in den beiden Vektoren bedeuten.

Auf der Grundlage der vorbereiteten Vektoren kann ein erster Plausibilitätstest jedes Vektors durchgeführt werden. Jede Komponente eines Vektors kann beispielsweise darauf überprüft werden, ob sie zwischen einem für diese Komponente erlaubten Minimalwert und einem erlaubten Maximalwert liegt. Darüberhinaus kann die Plausibilität der Komponenten zumindest grob überprüft werden, indem sie innerhalb desselben Vektors miteinander in Relation gesetzt werden. Es ist beispielsweise unwahrscheinlich, dass eine Ärmellänge eines Hemdes eine Knopfleistenlänge desselben Hemdes um das Doppelte übersteigt.

Jedes der Produktionsmaße, welches eine Komponente des Produktionsmaße-Vektors bildet, kann statt als einzelner Wert auch in Form eines Bereichs angegeben sein. Auf diese Weise kann beispielsweise modelliert werden, dass ein Herren-Oberhemd mit einer Nenn-Kragenweite von 41 cm von Menschen getragen werden kann, deren Halsumfang beispielsweise zwischen 38 und 42 cm liegt. Durch die Angabe von zwei Werten je Komponente des Produktionsmaße-Vektors wird aus einem n-dimensionalen Vektor ein n-dimensionales Volumen.

In ähnlicher Weise kann den Elementen der Körpermaße des Verbrauchers jeweils ein Gültigkeitsbereich zugeordnet werden, um beispielsweise gewollte Variationen bei der Kleidungswahl, sich graduell ändernde Körpermaße, etwa bei einem Kind oder einer schwangeren Frau, oder ähnliche Einflüsse zu modellieren. Aus dem n-dimensionalen Körpermaße-Vektor geht auf diese Weise ein n-dimensionales Körpermaße-Volumen hervor.

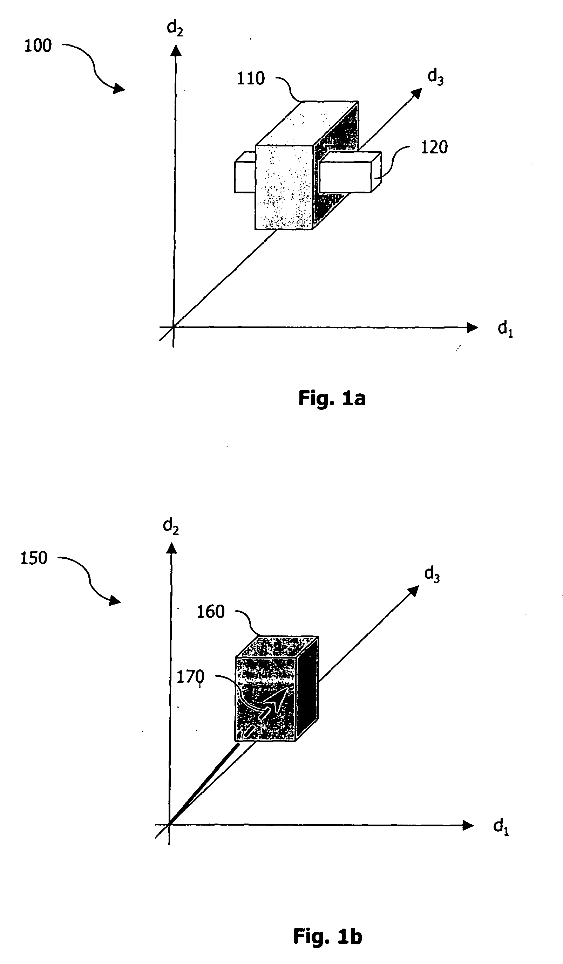

Bezugnehmend auf Fig. 1a ist eine dreidimensionale Darstellung 100 dargestellt, deren Dimensionen $d_1$, $d_2$ und $d_3$ paarweise aufeinander senkrecht stehen. Aus Darstellungsgründen wird im Folgenden davon ausgegangen, dass ein Produktionsmaße-Vektor bzw. ein Produktionsmaße-Volumen und ein Körpermaße-Vektor bzw. ein Körpermaße-Volumen jeweils drei Komponenten hat, welche den Dimensionen $d_1$ bis $d_3$ zugeordnet sind.

Das Produktionsmaße-Volumen 110 ist durch einen Quader in Fig. 1a dargestellt. Die Kantenlänge des Produktionsmaße-Volumens 110 entlang der Dimension $d_1$ wird durch einen minimalen und einen maximalen Wert angegeben (nicht eingezeichnet). Entsprechendes gilt für die Kantenmaße des Produktionsmaß-Volumens entlang der Dimensionen $d_2$ und $d_3$. Auf diese Weise ist sowohl die Größe als auch die Position des Produktionsmaße-Volumens 110 im Raum der Dimensionen $d_1$ bis $d_3$ eindeutig definiert.

In entsprechender Weise ist in Fig. 1a ein Körpermaße-Volumen 120 dargestellt. Entlang jeder der Dimensionen $d_1$ bis $d_3$ weist das Körpermaße-Volumen 120 andere Ober- und Untergrenzen als das Produktionsmaß-Volumen 110 auf. Es ist zu sehen, dass sich das Körpermaße-Volumen 120 und das Produktionsmaße-Volumen 110 teilweise durchdringen.

Um herauszufinden, ob das Kleidungsstück, dass durch das Produktionsmaße-Volumen 110 repräsentiert wird, an die Körpermaße des Verbrauchers, die durch das Körpermaße-Volumen 120 repräsentiert werden, passt, wird in einer Ausgestaltung der Erfindung überprüft, ob es einen Punkt innerhalb des durch die Dimensionen $d_1$ bis $d_3$ aufgespannten Raums gibt, der in beiden Volumina 110 und 120 liegt.

In Fig. 1b ist eine dreidimensionale Darstellung 150 gezeigt, die den gleichen Raum wie in Fig. 1a in Form der Dimensionen $d_1$ bis $d_3$ zugrundelegt. Ein Produktionsmaße-Volumen 160, welches in jeder Dimension $d_1$ bis $d_3$ andere Ober- und Untergrenzen als das Produktionsmaße-Volumen 110 aus Fig. 1a aufweist, ist in Form eines Quaders eingezeichnet. Anstelle eines Körpermaße-Volumens 120 ist jedoch in Fig. 1b ein Repräsentant eines Körpermaße-Vektors 170 eingezeichnet, der vom Ursprung des Koordinatensystems der Dimensionen $d_1$ bis $d_3$ ausgeht und dessen Ende (Spitze) innerhalb des Produktionsmaße-Volumens 160 liegt. Diese Darstellung betrifft einen einfacher zu behandelnden Fall als oben in Fig. 1a, weil jedes der Körpermaße nur in Form einer einzigen Angabe vorliegt, und daher ein Körpermaße-Vektor 170 anstelle eines Körpermaße-Volumens 120 verwendet werden kann.

In diesem Fall wird bestimmt, dass das Kleidungsstück an die Körpermaße des Verbrauchers passt, wenn der Endpunkt des Körpermaße-Vektors 170 innerhalb des Produktionsmaße-Volumens 160 liegt.

Eine Reduktion des Körpermaße-Volumens 120 aus Fig. 1a auf den Körpermaße-Vektor 170 aus Fig. 1b lässt sich auf verschiedene Weisen durchführen. Eine Möglichkeit besteht darin, ein möglichst repräsentatives Körpermaß des Verbrauchers in jeder der Dimensionen aus dem gegebenen Bereich auszuwählen. Eine solche Auswahl kann beispielsweise durch den Verbraucher selbst, alleine oder in Zusammenarbeit mit einem geschulten Berater, durchgeführt werden. In einer anderen Ausgestaltung kann eine Ausdehnung eines Körpermaße-Volumens entlang einer Dimension auf ihren (beispielsweise arithmetischen oder geometrischen) Mittelwert reduziert werden.

Der Unterschied zwischen dem Minimal- und dem Maximalwert der betreffenden Komponente kann in eine Ausdehnung des Produktionsmaße-Volumens 160 einfließen. In der Regel nimmt dadurch die Ausdehnung des Produktionsmaße-Volumens entlang jeder der Dimensionen um einen Betrag ab, welcher der ursprünglichen Ausdehnung des Körpermaße-Volumens entspricht. Auf eine entsprechende Weise kann selbstverständlich auch aus einem Produktionsmaße-Volumen ein Produktionsmaße-Vektor generiert werden.

Um zusätzlich zu einer binären Aussage des Passens oder Nicht-Passens ein Maß für die Qualität des Passens eines Kleidungsstücks an die Körpermaße eines Verbrauchers angeben zu können, bietet es sich an, einen Körpermaße-Vektor mit einem Produktionsmaße-Vektor zu vergleichen, wofür gegebenenfalls Reduktionen von Volumen in Vektoren durchzuführen sind.

Der geometrische Mittelpunkt eines n-dimensionalen Volumens ist beschrieben durch einen n-dimensionalen Vektor, dessen Komponenten jeweils die Mittelwerte der Bereiche sind, die entsprechende Komponenten des Volumens verkörpern. Auf diese Weise kann der Abstand der Endpunkte des Körpermaße-Vektors vom Endpunkt des Produktionsmaße-Vektors bestimmt werden. Um zu berücksichtigen, dass die unterschiedlichen Dimensionen eventuell nicht miteinander vergleichbare Einheiten tragen (zum Beispiel kg und cm), und dass generell eher eine relative als eine absolute Abweichung in jeder Dimension repräsentativ für ein Maß des Passens ist, kann der Abstand der Vektor-Endpunkte in Form eines relativen euklidschen Abstands angegeben werden:

$$d = \sqrt{\sum_{i=1}^{n}\left(\frac{x_{iP} - x_{iK}}{x_{iP}}\right)^2}$$

Dabei bedeuten:

d: eine Zahl, die den Abstand der Endpunkte des Produktionsmaße-Vektors und des Körpermaße-Vektors repräsentiert,
n: die Anzahl der verwendeten Komponenten bzw. Dimensionen ($n \geq 1$),
i: ein Laufindex ($1 \leq i \leq n$),
$x_{iP}$: die i-te Komponente des Produktionsmaße-Vektors, und
$x_{iK}$: die i-te Komponente des Körpermaße-Vektors.

Zusätzlich kann noch ein Wichtungsfaktor $w_i$ für jede der Komponenten verwendet werden, welcher angibt, wie relevant eine Abweichung eines gegebenen Körpermaßes von einem entsprechenden Produktionsmaß ist:

$$d = \sqrt{\sum_{i=1}^{n}\left(\left(\frac{x_{iP} - x_{iK}}{x_{iP}}\right)^2 \cdot w_i\right)}$$

Dabei ist $w_i$ der i-te Wichtungsfaktor.

Die Wichtungsfaktoren $w_i$ können auf einer festen Skala angegeben werden, beispielsweise zwischen 0 und 1. Ein Wichtungsfaktor von 0 bedeutet dann, dass eine Abweichung der Komponente des Produktionsmaßes von der entsprechenden Komponente des Körpermaßes überhaupt nicht berücksichtigt wird. Auf diese Weise können irrelevante Maße aus einer Bestimmung der Passqualität eines Kleidungsstücks ausgeschlossen werden. Ein Beispiel hierfür könnte ein T-Shirt sein, dessen einzig relevante Abmessung ein Bauchumfang ist, wobei trotzdem eine Schulterbreite des Kleidungsstücks bekannt ist. Ein Wichtungsfaktor von 1 hingegen lässt einen Unterschied zwischen einem Produktionsmaß und einem entsprechenden Körpermaß voll in die Bestimmung der Passqualität eingehen.

Durch eine derartige Bestimmung kann auf einfache Weise schnell und zutreffend festgestellt werden, wie gut ein Kleidungsstück den Körpermaßen eines Verbrauchers entspricht.

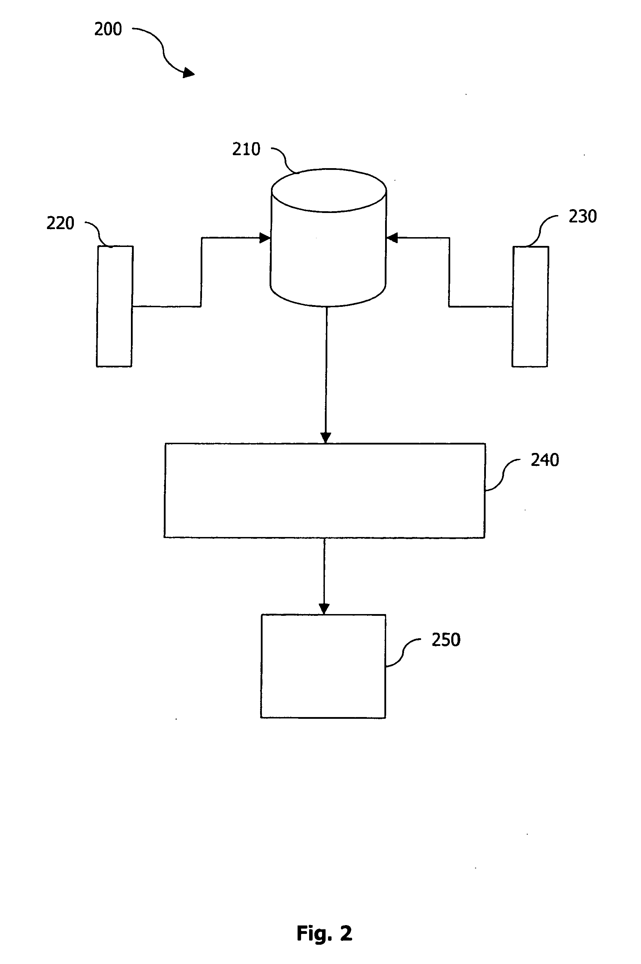

Fig. 2 zeigt ein System 200 zur Feststellung, ob ein Kleidungsstück den Körpermaßen eines Verbrauchers entspricht. Ein Speicher 210 kann mittels zweier unterschiedlicher Eingabeschnittstellen 220 und 230 gefüllt werden. Die Schnittstelle 220 ist ausgebildet, Körpermaße eines Verbrauchers von einer automatischen Körpermaße-Erfassungs-einrichtung zu Empfangen und in geeigneter Weise im Speicher 210 abzulegen. Über die Schnittstelle 230 empfangene Produktionsmaße und ihnen jeweils zugeordnete Toleranzen mehrerer Kleidungsstücke werden im Speicher 210 abgelegt. Eine Verarbeitungseinheit 240 liest jeweils die Produktionsmaße und Toleranzen eines Kleidungsstücks und die Körpermaße des Verbrauchers aus dem Speicher 210 und führt das oben beschriebene Verfahren durch, um festzustellen, ob ein Kleidungsstück den Körpermaßen des Verbrauchers entspricht. Entspricht das Kleidungsstück, dem die gelesenen Produktionsmaße und Toleranzen zugeordnet sind, den gelesenen Körpermaßen des Verbrauchers, so gibt die Verarbeitungseinheit 240 auf einer Ausgabeeinheit 250 eine Nachricht aus, welche den Namen des Verbrauchers, eine Bezeichnung des Kleidungsstücks, eine Bezeichnung der Konfektionsgröße des Kleidungsstücks, die Feststellung, ob das Kleidungsstück dem Verbraucher passt oder nicht, sowie ein Maß für die Qualität des Passens aus. Die ausgegebenen Informationen können ganz oder teilweise graphisch dargestellt werden.

**Patentansprüche**

1.  Verfahren zum Bestimmen einer Passqualität eines individuell gefertigten Kleidungsstücks zu Körpermaßen eines Verbrauchers, folgende Schritte umfassend:

    - Bestimmen eines n-dimensionalen Körpermaße-Vektors (170) mit $n \geq 2$ aus den Körpermaßen des Verbrauchers;
    - für jedes Kleidungsstück, Bestimmen eines n'-dimensionalen Produktionsmaße-Volumens (110) in Form einer n' Wertepaaren entsprechenden n' x m-Matrix mit $n' \geq 2$ und $m = 2$, wobei das jeweilige Wertepaar eine Ober- und Untergrenze einer jeweils dem Kleidungsstück zugeordneten Toleranz des Produktionsmaßes angibt; und
    - Bestimmen der Passqualität des Kleidungsstücks zu den Körpermaßen des Verbrauchers durch

        a) Reduzieren des Produktionsmaße-Volumens (110) auf einen n'-dimensionalen Produktionsmaße-Vektor, dessen n' Werte jeweils einen Mittelwert der n' Wertepaare repräsentieren; und
        b) Ermitteln eines einzigen, die Passqualität repräsentierenden Abstandswerts aus einem relativen oder absoluten euklidischen Abstand oder aus einem relativen oder absoluten bezüglich der Komponenten gewichteten Abstand der Endpunkte des Produktionsmaße-Vektors und des Körpermaße-Vektors (170),
        falls der Endpunkt des Körpermaße-Vektors (170) innerhalb des Produktionsmaße-Volumens (110) liegt.

2.  Verfahren nach einem der vorangehenden Ansprüche, **dadurch gekennzeichnet, dass** das Produktionsmaße-Volumen (110) und der Körpermaße-Vektor (170) lediglich auf der Basis derjenigen Maße bestimmt werden, für die im Produktionsmaße-Volumen (110) und im Körpermaße-Vektor (170) zueinander korrespondierende Daten vorliegen.

3.  Verfahren nach einem der vorangehenden Ansprüche, wobei die Wichtungsfaktoren des gewichteten Abstands jeweils einer Signifikanz einer Abweichung des jeweiligen Körpermaßes von dem ihm zugeordneten Produktionsmaß zugeordnet sind.

4.  Verfahren nach einem der vorangehenden Ansprüche, **dadurch gekennzeichnet, dass** das Produktionsmaße-Volumen (110) bezüglich seiner einzelnen Komponenten unterschiedliche relative oder absolute Ausdehnung hat.

5.  Verfahren nach einem der vorangehenden Ansprüche, **dadurch gekennzeichnet, dass** die Bestimmung des Produktionsmaße-Volumens (110) und der Passqualität jeweils für eine Vielzahl individuell gefertigter Kleidungsstücke ausgeführt werden, und jedes Kleidungsstück eine Bezeichnung aufweist und dass die Bezeichnungen einer vorbestimmten Anzahl Kleidungsstücke ausgegeben werden, die für am besten passend befunden wurden.

6.  Computerprogrammprodukt mit Programmcodemitteln zur Durchführung des Verfahrens nach einem der vorangegangenen Ansprüche, wenn das Computerprogrammprodukt auf einer Verarbeitungseinheit läuft.

7.  Computerprogrammprodukt gemäß dem vorigen Anspruch, wenn es auf einem computerlesbaren Datenträger gespeichert ist.

8.  System (200) zur Bestimmung einer Passqualität eines individuell gefertigten Kleidungsstücks zu Körpermaßen eines Verbrauchers, umfassend:

    - eine erste Schnittstelle (220) zu einer Vorrichtung zur automatischen Erfassung von Körpermaßen des Verbrauchers;
    - eine zweite Schnittstelle (230) zur Eingabe von dem Kleidungsstück zugeordneten Produktionsmaßen und jeweils diesen Produktionsmaßen zugeordneten Toleranzen;
    - Speichermittel (210) zur Speicherung von mittels der beiden Schnittstellen empfangenen Daten;
    - Verarbeitungsmittel (240) zur Bestimmung einer Passqualität des Kleidungsstücks zu dem Verbraucher,
    **dadurch gekennzeichnet, dass**
    - das Verarbeitungsmittel (240) zur Bestimmung eines dem Verbraucher zugeordneten n-dimensionalen Körpermaße-Vektors (170) mit $n \geq 2$

aus den Körpermaßen sowie eines dem Kleidungsstück zugeordneten n'-dimensionalen Produktionsmaße-Volumens (110) in Form einer n' Wertepaaren entsprechenden n' x m-Matrix mit n' ≥ 2 und m = 2, wobei das jeweilige Wertepaar eine Ober- und Untergrenze einer jeweils den Produktionsmaßen zugeordneten Toleranz ausgebildet ist; und

- das Verarbeitungsmittel (240) ferner zur Bestimmung der Passqualität ausgebildet ist durch

a) Reduzieren des Produktionsmaße-Volumens (110) auf einen n'-dimensionalen Produktionsmaße-Vektor, dessen n'-Werte jeweils einen Mittelwert der n'-Wertepaare repräsentieren; und

b) Ermitteln eines einzigen, die Passqualität repräsentierenden Abstandswerts aus einem relativen oder absoluten euklidischen Abstand oder aus einem relativen oder absoluten bezüglich der Komponenten gewichteten Abstand der Endpunkte des Produktionsmaße-Vektors und des Körpermaße-Vektors (170),

falls der Endpunkt des Körpermaße-Vektors (170) innerhalb des Produktionsmaße-Volumens (110) liegt, ausgebildet ist.

**Claims**

1. A method for the determination of a fit quality of an individually manufactured article of clothing to body dimensions of a consumer, comprising the following steps:

- determining an n dimensional body dimensions vector (170) with n ≥ 2 from the body dimensions of the consumer;
- for each article of clothing, determining an n' dimensional production dimensions volume (110) in the form of an n' x m matrix corresponding to n' value pairs, with n' ≥ 2 and m = 2, with the respective value pair indicating an upper and a lower limit of a tolerance of the production dimension, which is allocated to the respective article of clothing; and
- determining the fit quality of the article of clothing to the body dimensions of the consumer by

a) reducing the production dimensions volume (110) to an n' dimensional production dimensions vector whose n' values represent a mean value each of the n' value pairs; and

b) determining a single distance value which represents the fit quality from a relative or absolute Euclidian distance, or from a relative or absolute distance of the end points of the production dimensions vector and the body dimensions vector (170), which is weighted with respect to the components,

if the end point of the body dimensions vector (170) lies within the production dimensions volume (110).

2. The method according to the previous claim, **characterised in that** the production dimensions volume (110) and the body dimensions vector (170) are determined on the basis of those dimensions only for which mutually corresponding data are existing in the production dimensions volume (110) and in the body dimensions vector (110).

3. The method according to one of the previous claims, wherein the weighting factors of the weighted distance are allocated each to a significance of a deviation of the respective body dimension from the production dimension allocated to it.

4. The method according to one of the previous claims, **characterised in that** the production dimensions volume (110) has various relative or absolute extensions with respect to its individual components.

5. The method according to one of the previous claims, **characterised in that** the determination of the production dimensions volume (110) and of the fit quality is carried out for a plurality of individually manufactured articles of clothing each, and that each article of clothing comprises a designation, and that the designations of a predetermined number of articles of clothing are output, which are found to be best fitting.

6. A computer programme product with programme code means for executing the method according to one of the previous claims, if the computer programme product runs on a processing unit.

7. The computer programme product according to the previous claim, if stored on a computer-readable data carrier.

8. A system (200) for the determination of a fit quality of an individually manufactured article of clothing to body dimensions of a consumer, comprising:

- a first interface (220) to an apparatus for the automatic collection of body dimensions of a consumer;
- a second interface (230) for the input of production dimensions allocated to the article of clothing and tolerances which are allocated each to these production dimensions;

- a memory means (210) for the storing of data which are received by means of the two interfaces;
- a processing means (240) for determining a fit quality of the article of clothing to the consumer, **characterised in that**
- the processing means (240) is adapted to determine an n dimensional body dimensions vector (170) which is allocated to the consumer, with $n \geq 2$ from the body dimensions as well as a an n' dimensional production dimensions volume (110) in the form of an n' x m matrix corresponding to n' value pairs, which is allocated to the article of clothing, with $n' \geq 2$ and m = 2, with the respective value pair indicating an upper and a lower limit of a tolerance of the production dimension, which is allocated to the respective article of clothing; and
- the processing means (240) is further adapted to determine the fit quality by

a) reducing the production dimensions volume (110) to an n' dimensional production dimensions vector whose n' values represent a mean value each of the n' value pairs; and

b) determining a single distance value which represents the fit quality from a relative or absolute Euclidian distance, or from a relative or absolute distance of the end points of the production dimensions vector and the body dimensions vector (170), which is weighted with respect to the components, if the end point of the body dimensions vector (170) lies within the production dimensions volume (110).

**Revendications**

1. Procédé pour déterminer l'adéquation d'un vêtement fabriqué individuellement aux mensurations d'un consommateur, comprenant les étapes suivantes :

- détermination d'un vecteur dimensionnel n de mensuration (170), dans le cadre duquel $n \geq 2$, à partir des mensurations du consommateur ;
- détermination pour chaque vêtement d'un volume dimensionnel n' de cotes de fabrication (110) sous la forme d'une matrice n' x m correspondant à des paires de valeurs n', dans le cadre de laquelle $n' \geq 2$ et m = 2, la paire de valeurs respective indiquant la limite inférieure et la limite supérieure d'une tolérance dimensionnelle de fabrication respectivement associée au vêtement ; et

- détermination de l'adéquation d'un vêtement aux mensurations du consommateur par

a) réduction du volume des cotes de fabrication (110) à un vecteur dimensionnel n' de cotes de fabrication, dont les valeurs n' représentent respectivement une valeur moyenne des paires de valeurs n' ; et
b) calcul d'une seule valeur d'écart représentant ladite adéquation à partir d'un écart euclidien absolu ou relatif ou d'un écart absolu ou relatif pondéré par rapport aux composantes entre les points terminaux du vecteur de cotes de fabrication et du vecteur de mensuration (170), si le point terminal du vecteur de mensuration (170) se situe à l'intérieur du volume des cotes de fabrication (110).

2. Procédé selon la revendication précédente, **caractérisé en ce que** le volume des cotes de fabrication (110) et le vecteur de mensuration (170) sont déterminés uniquement sur la base des dimensions pour lesquelles il existe dans le volume des cotes de fabrication (110) et dans le vecteur de mensuration (170) des données se correspondant mutuellement.

3. Procédé selon l'une des revendications précédentes, les facteurs de pondération de l'écart pondéré étant respectivement associés à une valeur significative de l'écart entre la mensuration respective et la cote de fabrication qui lui est associée.

4. Procédé selon l'une des revendications précédentes, **caractérisé en ce que** le volume des cotes de fabrication (110) possède une extension absolue ou relative différente selon ses composantes différentes.

5. Procédé selon l'une des revendications précédentes, **caractérisé en ce que** le volume des cotes de fabrication (110) et ladite adéquation sont déterminés à chaque fois pour un grand nombre de vêtements fabriqués individuellement et que chaque vêtement présente une désignation et que les désignations d'un nombre prédéfini de vêtements sont délivrés aux vêtements considérés comme allant le mieux.

6. Produit de programme informatique avec des moyens de code de programme pour exécuter le procédé selon l'une des revendications précédentes lorsque le produit de programme informatique tourne sur une unité de traitement.

7. Produit de programme informatique selon la revendication précédente, lorsque celui-ci est mémorisé sur un support de données lisible par ordinateur.

**8.** Système (200) pour déterminer l'adéquation d'un vêtement fabriqué individuellement aux mensurations d'un consommateur, comprenant :

- une première interface (220) vers un dispositif permettant la saisie automatique des mensurations du consommateur ;
- une deuxième interface (230) permettant l'entrée des cotes de fabrication associées au vêtement et des tolérances respectivement associées auxdites cotes de fabrication ;
- un moyen de sauvegarde (210) pour mémoriser les données reçues par le biais des deux interfaces ;
- un moyen de traitement (240) pour déterminer une adéquation du vêtement aux mensurations du consommateur,
**caractérisé en ce que**
- le moyen de traitement (240) est conçu pour déterminer un vecteur dimensionnel n de mensuration (170), dans le cadre duquel $n \geq 2$, à partir des mensurations du consommateur et un volume dimensionnel n' de cotes de fabrication (110) sous la forme d'une matrice n' x m correspondant à des paires de valeurs n', dans le cadre de laquelle $n' \geq 2$ et $m = 2$, la paire de valeurs respective indiquant la limite inférieure et la limite supérieure d'une tolérance dimensionnelle de fabrication respectivement associée au vêtement ; et
- le moyen de traitement (240) est de plus conçu pour déterminer ladite adéquation par

a) réduction du volume des cotes de fabrication (110) à un vecteur dimensionnel n' de cotes de fabrication, dont les valeurs n' représentent respectivement une valeur moyenne des paires de valeurs n' ; et
b) calcul d'une seule valeur d'écart représentant ladite adéquation à partir d'un écart euclidien absolu ou relatif ou d'un écart absolu ou relatif pondéré par rapport aux composantes entre les points terminaux du vecteur de cotes de fabrication et du vecteur de mensuration (170),

- si le point terminal du vecteur de mensuration (170) se situe à l'intérieur du volume des cotes de fabrication (110).

**Fig. 1a**

**Fig. 1b**

200

210

220

230

240

250

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 01039051 A3
- EP 1229478 A2